# EUROPEAN PATENT SPECIFICATION

(11) **EP 2 725 670 B1**
(45) Date of publication and mention of the grant of the patent: **11.06.2014**
(21) Application number: 12190164.9
(22) Date of filing: 26.10.2012
(51) Int. Cl.: H02G 3/04, H02G 3/06

(54) **Channel portion for forming a channel, channel and methods for providing and manufactoring such channel.**
Kanalabschnitt zur Herstellung eines Kanals, Kanal und Verfahren zur Bereitstellung und Herstellung eines derartigen Kanals
Partie de canal pour former un canal, canal et procédés de fourniture et de fabrication sur ce canal

(43) Date of publication of application: 30.04.2014
(73) Proprietor: Vezzel AB, 342 32 Alvesta (SE)
(72) Inventor: Eakson, Claes, 342 32 Alvesta (SE)
(74) Representative: Bokinge, Ole

(56) References cited:
- EP-A1- 2 369 705
- WO-A2-2005/045294
- DE-U1-202008 009 852
- GB-A- 954 230
- US-B1- 6 216 746

## Description

### TECHNICAL FIELD

The present invention relates to a channel for use in underground cable or pipe installations, and a method for installing cables underground in such a channel.

### BACKGROUND OF THE INVENTION

Historically, cables have been installed in overhead installations as it is a cost-efficient way of installing cables. However, overhead installations have several drawbacks such as being unaesthetic, constituting obstacles in developed areas, and in being exposed for vegetation, bad weather etc. Therefore, many state of the art cable installations are underground installations. Some underground cable installations are enabled by culverts, and other underground installations are enabled by cable pipes constituting a mechanical protection for the cables.

The invention relates to an improvement of a cable pipe, normally buried in a particulate material such as sand, gravel, dirt or clay and the alike. Such cable pipes are normally first installed underground and subsequently cables are pulled through the installed pipes. A common problem with those cable pipes is that when pulling cables through the already installed pipes a high friction between the cable and the pipe is generated, especially if the cable is heavy and rigid and if the pipes are curved. State of the art solutions to this problem is primarily to use a pulling line or machine, which requires large forces, or to bury cable channels with preinstalled cables, which is heavy, expensive and inflexible. Therefore, a drawback with state of the art cable pipes solutions is that the installation is time consuming and costly.

Thus, there is a need for an improved method and cable channel for underground cable installations.

WO 2005/045294 A2 discloses duct units and ducts embodying same for housing service cables, pipes and the like.

US 6,216,746 B1 discloses a lay-in wireway.

### SUMMARY OF THE INVENTION

A general object of the invention is to provide an improved method for underground cable installations. A specific object of the invention is to provide a method and a cable channel that enables reduced time for installing a cable in an underground installation.

The inventor has realized that by providing a cable channel portion with a design that enables the installer to arrange the cable in the channel before the cable channel is sealed, i.e. while the channel is open along a substantial part of its length, the installation is vastly facilitated. Further, by designing the cable channel portion with integrated end connecting means for enabling a positive interconnection between the channel portion and an adjacent channel portion the installation is further facilitated.

According to a first aspect of the inventive concept, the above and objects of the invention are at least alleviated by a channel portion for forming a buried cable channel for buried cable or pipe installations, wherein said channel portion comprises: an elongate base portion, extending along a longitudinal direction between first and second end opening portions, first and second side wall portions, extending substantially perpendicular from longitudinal side portions of the base portion, wherein the base portion and the side wall portions are integrated to provide a substantially U-shaped cross section of the channel portion, as seen in a plane perpendicular to the longitudinal direction, wherein the first end opening portion is interconnectable with a second end opening portion of a second, identical, channel portion, and that the first and second end opening portions are provided with first and second end connecting means, respectively, for providing a positive interconnection between the first end opening portion and the second end opening portion of the second, identical channel portion.

In the context of the application a "positive interlocking" means a form based connection. I.e. not an interlocking based merely on e.g. friction, but based on the form of the connecting means. Further, in the context of the application the term "integrated" should be understood as permanently joined or preferably "formed in one piece". Moreover, "longitudinal direction" should be understood as the direction in which the cable channel substantially extends, which is the same direction as the cable to be installed will extend. Further, in the context of the application the end connecting means are formed to interconnect two or more channel portions in a longitudinal direction in a short-end to short-end manner.

By providing a channel portion as described above an improved cable channel enabling facilitated underground cable installations. More specifically, allowing for an installer to arrange the cable in the channel before the cable channel is sealed, i.e. while the channel is open along a substantial part of its length, the installation is vastly facilitated. Further, by designing the cable channel portion with end connecting means so that it may be coupled to another cable channel portion to form a cable channel the installation is further facilitated.

Moreover, since the cable channel portions is substantially U-shaped, when it is mated with another U-shaped channel portion so the portions together form a substantially closed channel with a substantially rectangular cross-section, when seen in a plane perpendicular to the longitudinal direction, less filling material is required to bury the channel than in conventional pipes with a corresponding circular cross-section. Further, a U-shaped channel portion according to above has the advantage of not rolling away when being handled during production, transportation and installation. Moreover, the U-shaped form allows for more effective transportations, requiring only approximately half the volume due to that one channel portion may be arranged partly inside another channel portion if the open sides of the U-shaped portions are arranged towards each other and slightly transversally displaced. Further, as the U-shaped channel portions do not roll, any fittings usually holding pipes with a circular cross-section in place may be eliminated.

In yet one embodiment the first end connection means present a radially inwardly extending flange and the second end connection means present a radially outwardly extending flange, and wherein the inwardly extending flange is sized and adapted to retain the outwardly extending flange in a longitudinal direction, when the second end opening portion is received in the first end opening portion.

In one embodiment, the first end opening portion itself forms the first end connection means and the second end opening portion itself forms said second type coupling means. Thereby, a first channel portion may be longitudinally coupled to a second channel portion without the need of any external coupling means. Thereby, the first end connection means of a first channel portion may be inserted into the second end connection means of a second channel portion, and thereby longitudinally couple the two channel portions.

In yet one embodiment at least the side walls have a corrugated surface structure, wherein ridges and valleys forming the corrugated surface structure extend substantially perpendicular to the longitudinal direction.

In one embodiment both the side walls and the base have a corrugated surface structure, wherein the ridges and valleys forming the corrugated surface structure extend substantially perpendicular to the longitudinal direction.

In the context of this application, the term "corrugated" is understood to include surface structures having periodically recurring valleys and ridges. The structure may be generally sinusoid, square, saw toothed, etc. Thereby, the channel portion's rigidity may be increased.

In yet one embodiment, a corrugation period is 10-120 mm, preferably 40-80 mm. In one embodiment, the corrugation amplitude is 1-30 mm, preferably 5 -15 mm.

In yet one embodiment an outermost valley of the first end opening portion presents an inner space which is radially enlarged as compared to at least one further valley of the channel portion.

Thereby, it is possible that the outermost valley of the first end opening portion enables a second end opening portion to be fitted inside the outermost valley. Consequently, the coupling for providing a positive interconnection between the first end opening portion and the second end opening portion of the second, identical channel portion may be enabled through the corrugated surface structure, and more specifically through the outermost valley and the radially outwardly extending flange.

The first and second end connection means are adapted for allowing a limited movement between a pair of interconnected channel portions.

In one embodiment, the movement is in the form of a longitudinal displacement and/or an angular tilting. In one embodiment, the outwardly extending flange, when received in the valley, is displaceable and/or tiltable relative to the valley. Thereby, the flexibility of a cable channel comprising a number of cable channel portions may be increased. In one aspect, when considering the longitudinal displacement, the length of the cable channel may be altered. Further, when considering the angular tilting, the angle between a first channel portion and a second channel portion may be altered. An angular tilting means that a first channel portion's general extension forms an angle relative the general extension of a second portion. In one embodiment the angle may be between about 0 degrees and about ± 25 degrees in any direction. In another embodiment the angle may be about ± 15 degrees in any direction. In a third embodiment the angle may be about ± 10 degrees in any direction.

In yet one embodiment the outwardly extending flange, when received in the valley, is displaceable and/or tiltable relative to the valley and displacement or tilting is limited by longitudinally spaced apart proximal and distal valley side walls.

Thereby, the displacement and tilting function may be achieved by means of the integrated corrugated structure constituting a rigid and simple construction providing a fail-safe function and low production costs.

In yet one embodiment free edge portions of the first and second side walls present first and second long-side connection means, respectively, adapted for form-based engagement with corresponding long-side connection means of a second, similar channel portion, when the channel portion and the second channel portion are positioned so that their respective U-shaped cross-sections together form a substantially closed channel.

In the context of the application the "long-side connecting means" are formed to interconnect two channel portions longitudinally aligned and transversally displaced in a long-side to long-side manner, so as to form a substantially closed channel. That is, the two channel portions forms a bottom channel portion and a top channel portion, respectively, interconnected to form a substantially closed channel.

In one embodiment, the second similar channel portion is not only sim ilar, but identical, to the channel portion. Thereby, only one type of channel portion may be used when installing a long cable channel comprising several channel portions. By reducing the number of types of cable channel portions production costs may be kept low and installation facilitated.

In yet one embodiment the first long-side connection means comprises a resilient locking element which is adapted to engage a locking shoulder forming part of the second long-side connection means.

Thereby, the long-side connection means may engage the second long-side connection means without an activation of the interconnection from an installer. Instead, the installer merely needs to bring the two connection means in abutment to each other, and then the connection means will engage by means of the resilience of the locking member of the first long-side connection means. Thus, a channel portion with a resilient locking member as described above will further facilitate installation of a cable channel.

In yet one embodiment the locking element comprises a guide surface adapted for guiding the locking element into said engagement with the locking shoulder.

Thereby, it is further facilitated to interconnect a first channel portion, constituting a bottom channel guide, with a second channel portion, constituting a top channel guide, since the guide surface provides a larger accepted displacement tolerance when bringing the locking element and the locking shoulder towards each other.

In yet one embodiment the first connection means comprises a tongue protruding from its associated side wall edge portion and carrying the locking element.

Thereby, the locking element is easier to see and distinguish from the side wall edge portion and thus facilitating the installation process.

In yet one embodiment the second connection means comprises a spacer arranged for spacing the locking shoulder from its associated side wall edge portion.

Thereby, the locking shoulder is easier to see and distinguish from the side wall edge portion and thus facilitating the installation process.

In yet one embodiment, the channel portion's wall thickness is about 3-10 mm, preferably about 4-8 mm and most preferably about 5-7mm. Thereby, the channel portion becomes very rigid and may cope with tough handling and large external forces without being deformed or braking.

In one embodiment, the channel portion's wall thickness is about 1-5 mm, preferably about 2-4 mm and most preferably about 3 mm. Thereby, each channel portion's weight may be fairly light and handling the channel portion in production, transportation and installation may thereby be facilitated.

In one embodiment the entire channel portion is formed in one piece. Thereby, the manufacturing of the channel portion may be conducted through for example injection-molding. Further, no assembly of the channel portion is needed if it is produced in one piece.

In one embodiment the channel portion is substantially solidly enclosed so that no particulate material may enter the channel.

According to a second aspect of the inventive concept, above and other aspects of the inventive concept is achieved through a channel comprising a first bottom channel portion as described in anyone of embodiments above and a second bottom channel portion as described in anyone of the embodiments above, said first and second channel portions being interconnected in an end-to-end relationship.

In yet one embodiment the channel further comprises a first top channel portion as described in anyone of embodiments above, which is connected to one of the first and second bottom channel portions so as to form a closed channel.

Thereby, the first top channel portion together with the interconnected one of the first and second bottom channel portion forms a closed channel with a substantially rectangular cross-section, when seen in a plane perpendicular to the longitudinal direction. In one embodiment the rectangular cross-section may have a radius so that it becomes a super rectangle.

In another aspect of the inventive concept, the objects are achieved by providing a buried cable or pipe installation comprising a channel with channel portions as described in any of the embodiments above.

According to a third aspect of the inventive concept, above and other aspects of the inventive concept is achieved through a method for providing a channel for a buried cable or pipe installation, comprising: arranging a first channel portion as described in anyone of embodiments above such that its longitudinal opening faces substantially upwardly, arranging a second channel portion as described in anyone of embodiments above such that its longitudinal opening faces substantially upwardly and such that a first end opening portion of the first channel portion is interconnected with a second end opening portion of the second channel portion, introducing a cable or pipe in the longitudinal opening of the first and second channel portions, arranging a third channel portion , with its longitudinal opening facing substantially downwardly and longitudinally and laterally aligned with one of the first and second channel portions, interconnecting the third channel portion, along the longitudinal direction, with said one of the first and second channel portions, arranging a fourth channel portion, with its longitudinal opening facing substantially downwardly and longitudinally and laterally aligned with the other one of the first and second channel portions, and interconnecting the fourth channel portion, along the longitudinal direction, with said other one of the first and second channel portions.

Thereby, an easier installation method is provided. The installation is facilitated due to that only the bottom portion of the channel is provided first and subsequently the cables may be arranged inside the first bottom half. Only thereafter may the top portion of the channel be provided to enclose the cables in the channel. This method eliminates the step of pulling or dragging the cables or pipes inside the channel, which is both time-consuming and resource heavy.

In one embodiment, the third and forth channel portions are also channel portions as described in anyone of embodiments above.

Thereby, the installation is further facilitated, as the installer does not need to identify what channel portion that is a top or bottom channel portion, but may use one channel portion in any place.

In yet one embodiment, the method further comprises the step of burying the channel in a particulate material, such as sand, gravel, macadam, clay, soil or the like.

In yet one embodiment, before arranging the first bottom portion an optional preceding step is creating a ditch in which the channel may be arranged. However, being a channel buried in particulate material merely means that the channel is covered by a particulate material, and does not necessarily mean that the channel needs to be vertically lower displaced relative the surrounding surface of the ground. For example, the cable channel may be placed on the surface of the ground and subsequently covered with particulate material so that the channel covered with the particulate material form a ridge on the ground surface. Thereby, the channel portion is protected from outer impacts.

According to a third aspect of the inventive concept, above and other aspects of the inventive concept is achieved through a method for producing a channel portion according of any of the embodiments above by means of injection-molding.

Thereby, the channel portion may be produced in one piece and with a low cost, high efficiency production method.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 schematically illustrates a channel portion for constituting a portion of a cable channel according to one embodiment of the invention;
Fig. 2 schematically illustrates a cable channel according to one embodiment of the invention;
Fig. 3 schematically illustrates long-side connection means adapted for form-based engagement according to one embodiment,
Fig. 4 schematically illustrates a close-up of two channel portions being interconnected in an end-to-end relationship,
Fig. 5 schematically illustrates a flowchart of a method according to one embodiment,
Fig. 6 schematically illustrates a channel comprising four channel portions being interconnected.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. For example, although the channel and channel portions are primarily described to be used for cables, it is possible use the channel and channel portions for other applications such as piping for fluids or gas etc without deviating from what is claimed according to the claims.

Like reference characters refer to like elements throughout the application. Moreover, sometimes letters are used to indicate a plurality of similar elements. E.g. the reference number 100 is used to denote the channel portion, and 100a is used for a first channel portion and 100b is used for a second channel portion etc.

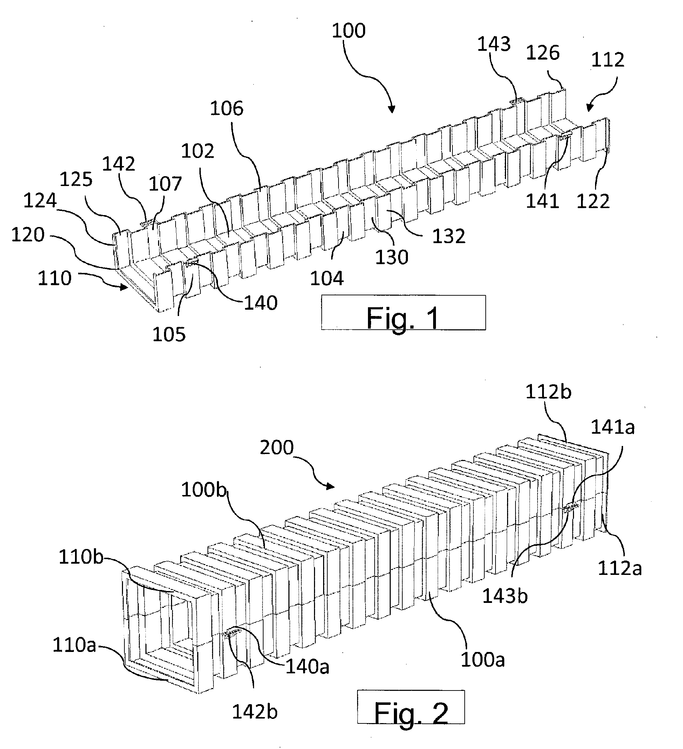

Fig. 1 illustrates a channel portion 100 for constituting a portion of a cable channel 200. In the embodiment illustrated in Fig. 1 the channel portion has an elongate base portion 102 which extends along a longitudinal direction between a first 110 and a second 112 end opening portions. The longitudinal direction coincides with the general direction in which a cable is to be installed. Further, the cable portion has a first 104 and a second 106 side wall portion. The side wall portions extend substantially perpendicular from the longitudinal side portions of the base portion 102. In this embodiment the side portions and the side walls constitute a rather sharp 90-degrees edge. However, in some other embodiments, there might be a larger radius of the edge between the base portion and the side wall portions. The base portion 102 will however show at least a longitudinal portion which has a plane area being substantially perpendicular to two plane areas located on an elongated portion of each wall portions 104, 106. The plane area on the base 102 and the two sides 104, 106 will prevent the channel portion 100 from rolling during production, transportation and installation. This means that the radius of the edge portions may not exceed half the width of the base 102 or the walls 104, 106.

The base portion 102 and the side wall portions 104, 106 are integrated to provide a substantially U-shaped cross section of the channel portion 100 when seen in a plane perpendicular to the longitudinal direction. Further, the first end opening portion 110 is interconnectable with a second end opening portion 112 of a second, identical, channel portion 100c. Moreover, the first 110 and second 112 end opening portions are provided with first 120 and second 122 end connecting means, respectively, for providing a positive interconnection between the first end opening portion 110 and the second end opening portion 112 of the second, identical channel portion 100c.

Further, the channel portion 100 as shown in fig. 1 has a corrugated surface structure on both the base and the side walls. There are ridges 130 and valleys 132 forming the corrugated surface structure extend substantially perpendicular to the longitudinal direction. The ridges 130 are protruding radially inwardly and the valleys 132 defining a recess with a wall being radially outwardly displaced compared to the wall of the ridge 130. That is, the valleys 132 and ridges 130 are to been seen from inside the channel portion to correspond to its descriptive names. In fact, when seen from the outside of the channel portion 100, the ridges look like valleys and the other way around.

In the embodiment shown the corrugated structure is a squared corrugated pattern. However, the corrugated pattern may also be generally sinusoid, saw toothed or similar. The corrugation period may be chosen to be between for example 10-120 mm, preferably 40-80 mm. Further the corrugation amplitude may be chosen to be e.g. 1-30 mm, preferably 5 -15 mm.
Further, in the embodiment shown in fig. 1, the corrugation covers essentially the whole channel portion 100. However, in other embodiments the corrugation would only cover most of the channel portions surface area, e.g. more than 60%, more than 80% or more than 90% of the surface area.

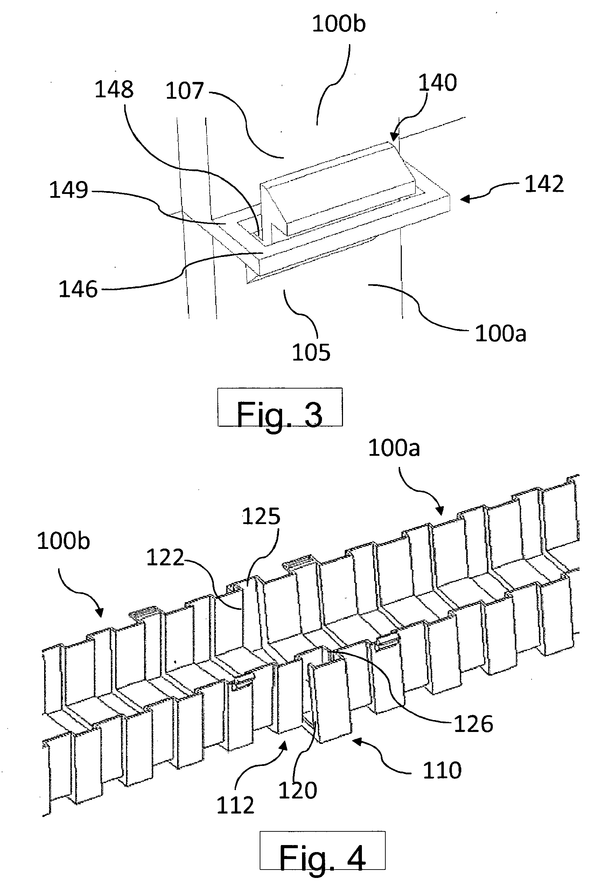

Further, the channel portion in fig. 1 has an outermost valley 125 of the first end opening portion 110 presenting an inner space which is radially enlarged as compared the other valleys 132 of the channel portion. This outermost valley may be used as a receiving part of the mentioned end connecting means 120, 122 between two channel portions 100a, 100c, in an end-to-end relationship as further described in relation to fig. 4.

Moreover, the channel portions 100 free edge portions of the first and second side walls 104, 106 present first 140;141 and second 142;143 long-side connection means, respectively. The long-side connection means are adapted for form-based engagement with corresponding long-side connection means 140;141, 142;143 of a second, similar channel portion 100b. As shown in Fig. 2, when the first channel portion 100a and the second channel portion 100b are aligned so that their respective U-shaped cross-sections together form a substantially closed channel (200), the long-side connection means of may interconnect the two channel portions. Further, the details about the long-side connection means will be further discussed when fig. 3 is discussed.

The channel portions may in one embodiment have a wall thickness of about 3-10 mm, preferably about 4-8 mm and most preferably about 5-7mm. In another embodiment, the channel portion's wall thickness may be about 1-5 mm, preferably about 2-4 mm and most preferably about 3 mm.

The material of the channel portion may be a high-density polyethylene (HDPE) material. It may further contain additives for achieving any desired characteristics in e.g. flexibility, durability, rigidness or similar. Further alternatives of the material may be Polyvinyl chloride (PVC), Polyethylene (PE), medium-density polyethylene (MDPE) or Polypropylene (PP) or other thermoplastics, each with our without additives for altering the properties of the material. There may also be armament in the material for increasing the durability and or the rigidness of the channel portions. In some embodiments the material may be a rubber material or other plastic material. Further, the material may be recycled material, either entirely recycled material or a only a portion of recycled material. The channel portion 100 may be adapted to classifications of cable ducts corresponding to e.g. SRS, SRR and/or SRE.

Regardless of the material it is preferred that the base 102 and walls 104, 106 of the channel portion 100 is substantially solidly enclosed so that no particulate material may enter the channel portion through the walls or base.

Moreover, the length of the channel portion may vary. In one embodiment the length may be between 300mm and 4000 mm, preferably about 700mm to about 2000mm. In one most preferred embodiment the length of the channel portion 100 is about 800mm to about 1200 mm. In the embodiment as shown in fig. 1 the longitudinal length of the channel portion 100 is about 1000 mm.

Further, the width of the channel portion 100 may vary. In one embodiment the width may be between 80mm and 300 mm, preferably about 100mm to about 220 mm. In one most preferred embodiment the width of the channel portion 100 is about 120 mm to about 200 mm.

It is further possible to have different widths or lengths of channel portions included in on channel.

As already mentioned above, Fig. 2 displays a channel 200 comprising a first bottom channel portion 100a and a first top channel portion 100b. The two channels 100a, 100b are interconnected by means of the long-side connections means. Further, the two channel portions are aligned so that the corresponding first and second en opening portions 110a, 110b; 112a, 112b are aligned. Further, since the corrugated surface structure extends substantially perpendicular relative the longitudinal direction of each channel portion 100a, 100b the corrugated surface structure is aligned to form a uniform surface structure for the whole channel 200.

In this embodiment, the two channel portions are interconnected at four places, two at each side. However, it is possible to form channel portions with fewer or more long-side connection means without deviating from the inventive concept. E.g. one long elongated long-side connection means at each side would work, or having three, four or more long-side connection means at each side would also work.

The details of how the two channel portions 100a, 100b are interconnected at each long-side connection means in the embodiment as shown may be studied in detail in fig. 3. The illustrated embodiment on how the channel portions is interconnected is one alternative, and other alternatives may also be used without deviating from the inventive concept. The long-side connection means are adapted for coupling the bottom channel portion 100a with the top channel portion 100b. The long-side coupling means may be formed for achieving a continuous channel adapted to enclose a portion of a cable or a pipe. It may be a mechanical coupling device which may prevent displacement of the bottom portion relative the top portion. The prevented displacement may be both in the plane which the channel substantially extends and in a plane perpendicular to that plane.

Thereby, wear and tear may be avoided. Further the channel may be kept substantially tightly sealed so that no particulate material such as sand, clay or gravel may enter the channel.

In fig. 3, the first long-side connection means 140 of the first channel portion 100a is a resilient locking element 145 that is adapted to engage a locking shoulder 146 forming part of the second long-side connection means 142 of the second channel portion 100b. Further, the locking element 145 comprises a guide surface 147 adapted for guiding the locking element 145 into an engagement with the locking shoulder 146. Moreover, the first connection means 140 comprises a tongue 148 protruding from its associated side wall edge portion 105 and carrying the locking element 145. Finally, the second connection means 142 comprises a spacer 149 arranged for spacing the locking shoulder 146 from its associated side wall edge portion 105.

Fig. 4 illustrates two channel portions 100a, 100c being interconnected in an end-to-end relationship, wherein fig 4 is a close-up of the interconnection between the two channel portions. The first end 110 of the first channel portion 100a comprises an outermost valley 125 presenting an inner space which is radially enlarged as compared the other valleys of the first channel portion as discussed above. Here, the outermost valley is used as a receiving portion of the end connecting means 122 of the second channel portion 100c. As can be seen, the inner space of the outer most valley 125 allows a I im ited movement between the interconnected channel portions 100a, 100c. Moreover, the outwardly extending flange 126 is received in the valley 125 and is displaceable and tiltable relative to the valley and the displacement or tilting is limited by longitudinally the spaced apart proximal and distal valley side walls. Due to this design, the interconnected channel portions may be partly displaced or tilted relative each other.

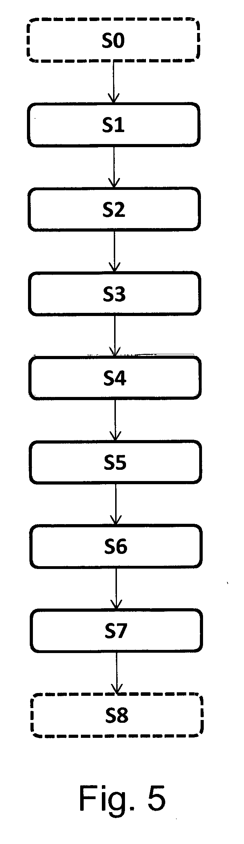

Fig. 5 shows a flowchart over the different steps S0-S8 for providing a channel for a buried cable installation, wherein step S0 and S8 are optional steps. The first optional step S0 is to, before arranging the first bottom portion 100a, creating a ditch in which the channel may be arranged. However, this step is an optional step as being a "buried cable" not necessarily means that the cable needs to be vertically lower displaced relative the surrounding surface of the ground. As discussed above, it merely means that the channel is covered by a particulate material.

Further, step S1 comprise arranging the first channel portion 100a such that its longitudinal opening faces substantially upwardly. Consequently the base should face substantially downwardly. The second step is arranging S2 a second channel portion 100c so that its longitudinal opening also faces substantially upwardly and so that a first end opening portion 110 of the first channel portion 100a is interconnected with a second end opening portion 112 of the second channel portion 100c, as described in relation to Fig. 4.

Further, the fourth step is introducing S3 a cable or pipe in the longitudinal opening of the first and second channel portions. This is a vastly simpler than pulling the cable through an already closed channel. The cable or pipe may now be lifted in, or even pushed into the open channel portions. In other embodiments, it is possible to arrange a plurality of so called bottom channel portions before introducing the cable into the channel portions.

Thereafter, the next step is arranging S4 a third channel portion 100b, with its longitudinal opening facing substantially downwardly and longitudinally and laterally aligned with one of the first and second channel portions 100a;100c. Thereby, at least a portion of the channel is substantially covered.

The next step is interconnecting S5 the third channel portion 100b, along the longitudinal direction, with said one of the first and second channel portions 100a;100c,.

The next step is arranging S6 a fourth channel portion 100d, with its longitudinal opening facing substantially downwardly and longitudinally and laterally aligned with the other one of the first and second channel portions 100c;100a.

And thereafter interconnecting S7 the fourth channel portion 100d, along the longitudinal direction, with the other one of the first and second channel portions 100c;100a. Moreover, as briefly discussed above, in other embodiments, it is possible to arrange a plurality of so called bottom channel portions in the channel, and consequently it is also possible to introduce a plurality of so called top channel portions.

Finally, an optional step is burying the channel in a particulate material, such as sand, gravel, macadam, clay, soil or the like.

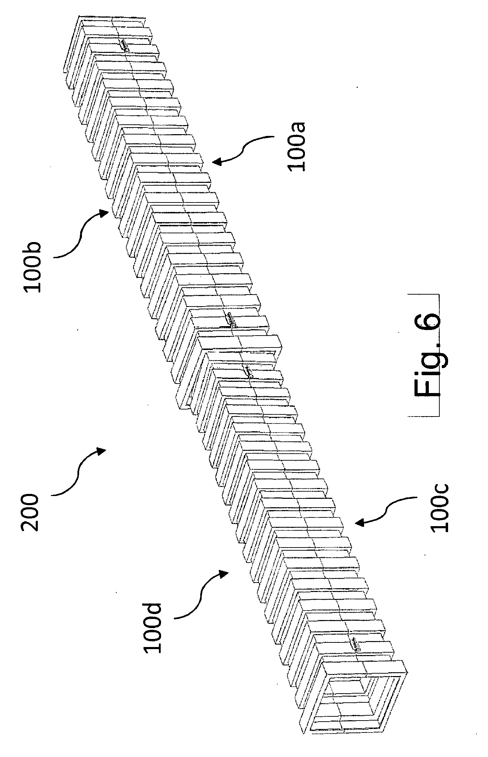

Fig. 6 further merely shows an illustration a channel comprising four channel portions 100a, 100b, 100c, 100d interconnected as described above. In Fig. 6 there are two so called bottom channel portions 100a, 100c and two so called top channel portions 100b, 100d. In the displayed embodiment all four channel portions are identical. In other embodiments the bottom channel portions are identical to each other and the top channel portions are identical to each other but different from the bottom channel portions. The bottom channels must however always be compatible to be arranged open long side to open long side with a top portion. Further, the top channel portions and the bottom channel portions shall be interconnectable with other top channel portions and bottom channel portions respectively in an end-to-end relationship as described above.

## Claims

1. A channel portion (100) for forming a buried cable channel for buried cable or pipe installations, wherein said channel portion (100) comprises:
an elongate base portion (102), extending along a longitudinal direction between first (110) and second (112) end opening portions,
first (104) and second (106) side wall portions, extending substantially perpendicular from longitudinal side portions of the base portion (102),
wherein the base portion (102) and the side wall portions (104, 106) are integrated to provide a substantially U-shaped cross section of the channel portion (100), as seen in a plane perpendicular to the longitudinal direction,
wherein the first end opening portion (110) is interconnectable with a second end opening portion (112c) of a second, identical, channel portion (100c), and
wherein the first (110) and second (112) end opening portions are provided with first (120) and second (122) end connecting means, respectively, for providing a positive interconnection between the first end opening portion (110a) and the second end opening portion (112c) of the second, identical channel portion (100c),
**characterised in that**
the first (120) and second (122) end connection means are adapted for allowing a limited movement in the form of a longitudinal displacement and/or an angular tilting between a pair of interconnected channel portions (100a, 100c).

2. The channel portion (100) as claimed in claim 1, wherein the first end connection means (120) present a radially inwardly extending flange (124) and the second end connection means (122) present a radially outwardly extending flange (126), and wherein the inwardly extending flange (124) is sized and adapted to retain the outwardly extending flange (126) in a longitudinal direction, when the second end opening portion is received in the first end opening portion.

3. The channel portion (100) according to any of the preceding claims, wherein at least the side walls (104, 106) have a corrugated surface structure, wherein ridges (130) and valleys (132) forming the corrugated surface structure extend substantially perpendicular to the longitudinal direction.

4. The channel portion (100) as claimed in claim 3, wherein an outermost valley (125) of the first end opening portion (110) presents an inner space which is radially enlarged as compared to at least one further valley (132) of the channel portion.

5. The channel portion (100) as claimed in any one of the preceding claims, wherein the outwardly extending flange (126), when received in the valley (125), is displaceable and/or tiltable relative to the valley and the displacement or tilting is limited by longitudinally spaced apart proximal and distal valley side walls.

6. The channel portion (1 00a) as claimed in any one of the preceding claims, wherein free edge portions of the first and second side walls present first (140, 141) and second (142, 143) long-side connection means, respectively, adapted for form-based engagement with corresponding long-side connection means (140;141, 142;143) of a second, similar channel portion (100b), when the channel portion (100a) and the second channel portion (100b) are positioned so that their respective U-shaped cross-sections together form a substantially closed channel (200).

7. The channel portion (100) as claimed in claim 6, wherein the first long-side connection means (140, 141) comprises a resilient locking element (145) which is adapted to engage a locking shoulder (146) forming part of the second long-side connection means (142, 143).

8. The channel portion (100) as claimed in claim 7, wherein the locking element (145) comprises a guide surface (147) adapted for guiding the locking element (145) into said engagement with the locking shoulder (146).

9. The channel portion (100) as claimed in claim 7 or 8, wherein the first connection means (140, 141) comprises a tongue (148) protruding from its associated side wall edge portion (105) and carrying the locking element (145).

10. The channel portion (100) as claimed in any one of claims 7-9, wherein the second connection means (142, 143) comprises a spacer (149) arranged for spacing the locking shoulder (146) from its associated side wall edge portion (105).

11. A channel (200) for forming a buried cable installation, the channel comprising a first bottom channel portion (100a) as claimed in any one of the preceding claims and a second bottom channel portion (100c) as claimed in any one of the preceding claims, said first (100a) and second (100c) channel portions being interconnected in an end-to-end relationship.

12. The channel (200) as claimed in claim 12, further comprising a first top channel portion (110b) as claimed in any one of claims 1-10, which is connected to one of the first (100a) and second (100c) bottom channel portions so as to form a closed channel.

13. A method for providing a channel (200) for a buried cable or pipe installation, comprising:
arranging (S1) a first channel portion (100a) as claimed in any one of claims 1-10 such that its longitudinal opening faces substantially upwardly,
arranging (S2) a second channel portion (100c) as claimed in any one of claims 1-10 such that its longitudinal opening faces substantially upwardly and such that a first end opening portion (110) of the first channel portion (100a) is interconnected with a second end opening portion (112) of the second channel portion (100c),
introducing (S3) a cable or pipe in the longitudinal opening of the first and second channel portions,
arranging (S4) a third channel portion (100b), with its longitudinal opening facing substantially downwardly and longitudinally and laterally aligned with one of the first and second channel portions (100a;100c),
interconnecting (S5) the third channel portion, along the longitudinal direction, with said one of the first and second channel portions (100a;100c),
arranging (S6) a fourth channel portion (100d), with its longitudinal opening facing substantially downwardly and longitudinally and laterally aligned with the other one of the first and second channel portions (100c;100a), and
interconnecting (S7) the fourth channel portion, along the longitudinal direction, with said other one of the first and second channel portions (100c;100a).

## Patentansprüche

1. Kanalabschnitt (100) zum Formen eines erdverlegten Kabelkanals für erdverlegte Kabel- oder Rohrinstallationen, wobei der Kanalabschnitt (100) Folgendes umfasst:
einen länglichen Basisabschnitt (102), der sich entlang einer Längsrichtung zwischen einem ersten (110) und einem zweiten (112) Endöffnungsabschnitt erstreckt,
einen ersten (104) und einen zweiten (106) Seitenwandabschnitt, die sich im Wesentlichen senkrecht von Längsseitenabschnitten des Basisabschnitts (102) aus erstrecken,
wobei der Basisabschnitt (102) und die Seitenwandabschnitte (104, 106) integriert sind, um, gesehen in einer Ebene, senkrecht zu der Längsrichtung, einen im Wesentlichen U-förmigen Querschnitt des Kanalabschnitts (100) bereitzustellen,
wobei der erste Endöffnungsabschnitt (110) wechselseitig mit einem zweiten Endöffnungsabschnitt (112c) eines zweiten, identischen, Kanalabschnitts (100c) verbunden werden kann und
wobei der erste (110) und der zweite (112) Endöffnungsabschnitt jeweils mit ersten (120) beziehungsweise zweiten (122) Endverbindungsmitteln versehen sind, um eine formschlüssige wechselseitige Verbindung zwischen dem ersten Endöffnungsabschnitt (110a) und dem zweiten Endöffnungsabschnitt (112c) des zweiten, identischen, Kanalabschnitts (100c) zu gewährleisten,
**dadurch gekennzeichnet, dass**
die ersten (120) und die zweiten (122) Endverbindungsmittel dafür eingerichtet sind, eine begrenzte Bewegung in der Form einer Längsverschiebung und/oder einer Winkelneigung zwischen einem Paar von wechselseitig verbundenen Kanalabschnitten (100a, 1 00c) zu ermöglichen.

2. Kanalabschnitt (100) nach Anspruch 1, wobei die ersten Endverbindungsmittel (120) einen sich in Radialrichtung nach innen erstreckenden Flansch (124) aufweisen und die zweiten Endverbindungsmittel (122) einen sich in Radialrichtung nach außen erstreckenden Flansch (126) aufweisen und wobei der sich nach innen erstreckende Flansch (124) dafür bemessen und eingerichtet ist, den sich nach außen erstreckenden Flansch (126) in einer Längsrichtung festzuhalten, wenn der zweite Endöffnungsabschnitt in dem ersten Endöffnungsabschnitt aufgenommen wird.

3. Kanalabschnitt (100) nach einem der vorhergehenden Ansprüche, wobei wenigstens die Seitenwände (104, 106) eine gewellte Oberflächenstruktur haben, wobei sich Kämme (130) und Täler (132), welche die gewellte Oberflächenstruktur bilden, im Wesentlichen senkrecht zu der Längsrichtung erstrecken.

4. Kanalabschnitt (100) nach Anspruch 3, wobei ein äußerstes Tal (125) des ersten Endöffnungsabschnitts (110) einen inneren Raum aufweist, der, verglichen mit wenigstens einem weiteren Tal (132) des Kanalabschnitts, in Radialrichtung vergrößert ist.

5. Kanalabschnitt (100) nach einem der vorhergehenden Ansprüche, wobei der sich nach außen erstreckende Flansch (126), wenn er in dem Tal (125) aufgenommen wird, im Verhältnis zu dem Tal verschoben und/oder geneigt werden kann und die Verschiebung oder Neigung durch in Längsrichtung entfernt voneinander angeordnete proximale und distale Talseitenwände begrenzt wird.

6. Kanalabschnitt (100a) nach einem der vorhergehenden Ansprüche, wobei freie Kantenabschnitte der ersten und der zweiten Seitenwand jeweils erste (140, 141) beziehungsweise zweite (142, 143) Langseiten-Verbindungsmittel aufweisen, die für einen formschlüssigen Eingriff mit entsprechenden Langseiten-Verbindungsmitteln (140; 141, 142; 143) eines zweiten, ähnlichen, Kanalabschnitts (100b) eingerichtet sind, wenn der Kanalabschnitt (100a) und der zweite Kanalabschnitt (100b) so angeordnet sind, dass deren jeweilige U-förmige Querschnitte zusammen einen im Wesentlichen geschlossenen Kanal (200) bilden.

7. Kanalabschnitt (100) nach Anspruch 6, wobei das erste Langseiten-Verbindungsmittel (140, 141) ein elastisches Verriegelungselement (145) umfasst, das dafür eingerichtet ist, einen Verriegelungsabsatz (146) in Eingriff zu nehmen, der einen Teil des zweiten Langseiten-Verbindungsmittels (142, 143) bildet.

8. Kanalabschnitt (100) nach Anspruch 7, wobei das Verriegelungselement (145) eine Führungsfläche (147) umfasst, die dafür eingerichtet ist, das Verriegelungselement (145) in den Eingriff mit dem Verriegelungsabsatz (146) zu führen.

9. Kanalabschnitt (100) nach Anspruch 7 oder 8, wobei das erste Verbindungsmittel (140, 141) eine Zunge (148) umfasst, die von dessen zugeordnetem Seitenwand-Kantenabschnitt (105) aus vorspringt und das Verriegelungselement (145) trägt.

10. Kanalabschnitt (100) nach einem der Ansprüche 7 bis 9, wobei das zweite Verbindungsmittel (142, 143) ein Abstandsstück (149) umfasst, das dafür angeordnet ist, den Verriegelungsabsatz (146) von dessen zugeordnetem Seitenwand-Kantenabschnitt (105) entfernt zu halten.

11. Kanal (200) zum Formen einer erdverlegten Kabelinstallation, wobei der Kanal einen ersten unteren Kanalabschnitt (100a) nach einem der vorhergehenden Ansprüche und einen zweiten unteren Kanalabschnitt (100c) nach einem der vorhergehenden Ansprüche umfasst, wobei der erste (100a) und der zweite (100c) Kanalabschnitt in einer Stoßbeziehung wechselseitig verbunden sind.

12. Kanal (200) nach Anspruch 11, der ferner einen ersten oberen Kanalabschnitt (110b) nach einem der Ansprüche 1 bis 10 umfasst, der mit einem von dem ersten (100a) und dem zweiten (100c) unteren Kanalabschnitt verbunden ist, so dass sie einen geschlossenen Kanal bilden.

13. Verfahren zum Bereitstellen eines Kanals (200) für eine erdverlegte Kabel- oder Rohrinstallation, das Folgendes umfasst:
das Anordnen (S1) eines ersten Kanalabschnitts (100a) nach einem der Ansprüche 1 bis 10 derart, dass seine Längsöffnung im Wesentlichen nach oben zeigt,
das Anordnen (S2) eines zweiten Kanalabschnitts (100c) nach einem der Ansprüche 1 bis 10 derart, dass seine Längsöffnung im Wesentlichen nach oben zeigt, und derart, dass ein erster Endöffnungsabschnitt (110) des ersten Kanalabschnitts (100a) wechselseitig mit einem zweiten Endöffnungsabschnitt (112) des zweiten Kanalabschnitts (100c) verbunden ist,
das Einführen (S3) eines Kabels oder Rohres in die Längsöffnung des ersten und des zweiten Kanalabschnitts,
das Anordnen (S4) eines dritten Kanalabschnitts (100b), wobei seine Längsöffnung im Wesentlichen nach unten zeigt, und in Längs- und in Seitenrichtung ausgerichtet mit einem von dem ersten und dem zweiten Kanalabschnitt (100a; 100c),
das wechselseitige Verbinden (S5) des dritten Kanalabschnitts, entlang der Längsrichtung, mit dem einen von dem ersten und dem zweiten Kanalabschnitt (100a; 100c),
das Anordnen (S6) eines vierten Kanalabschnitts (100d), wobei seine Längsöffnung im Wesentlichen nach unten zeigt, und in Längs- und in Seitenrichtung ausgerichtet mit dem anderen von dem ersten und dem zweiten Kanalabschnitt (100c; 100a) und
das wechselseitige Verbinden (S7) des vierten Kanalabschnitts, entlang der Längsrichtung, mit dem anderen von dem ersten und dem zweiten Kanalabschnitt (100c; 100a).

## Revendications

1. Partie de canal (100) pour former un canal de câble enfoui pour câbles enfouis ou installations de tuyaux, dans laquelle ladite partie de canal (100) comprend :
une partie de base allongée (102) s'étendant le long d'une direction longitudinale entre des première (110) et seconde (112) parties d'ouverture d'extrémité,
des première (104) et seconde (106) parties de paroi latérale s'étendant sensiblement perpendiculairement à partir de parties latérales longitudinales de la partie de base (102),
dans laquelle la partie de base (102) et les parties de paroi latérale (104, 106) sont intégrées afin de fournir une coupe transversale sensiblement en forme de U de la partie de canal (100) lorsque vue dans un plan perpendiculaire à la direction longitudinale,
dans laquelle la première partie d'ouverture d'extrémité (110) peut être interconnectée avec une seconde partie d'ouverture d'extrémité (112c) d'une deuxième partie de canal identique (100c), et
dans laquelle les première (110) et seconde (112) parties d'ouverture d'extrémité sont munies d'un premier (120) et second (122) moyen de connexion d'extrémité, respectivement, pour fournir une interconnexion positive entre la première partie d'ouverture d'extrémité (110a) et la seconde partie d'ouverture d'extrémité (112c) de la deuxième partie de canal identique (100c),
**caractérisée en ce que**
les premier (120) et second (122) moyens de connexion d'extrémité sont adaptés pour permettre un mouvement limité sous la forme d'un déplacement longitudinal et/ou d'une inclinaison angulaire entre une paire de parties de canal (110a, 100c) interconnectées.

2. Partie de canal (100) telle que revendiquée par la revendication 1, dans laquelle le premier moyen de connexion d'extrémité (120) présente une bride (124) s'étendant radialement vers l'intérieur et le second moyen de connexion d'extrémité (122) présentant une bride (126) s'étendant radialement vers l'extérieur, et dans laquelle la bride (124) s'étendant vers l'intérieur est dimensionnée et adaptée de manière à retenir la bride (126) s'étendant vers l'extérieur dans une direction longitudinale lorsque la seconde partie d'ouverture d'extrémité est réceptionnée dans la première partie d'ouverture d'extrémité.

3. Partie de canal (100) selon l'une quelconque des revendications précédentes, dans laquelle au moins les parois latérales (104, 106) ont une structure à surface ondulée, des crêtes (130) et des creux (132) formant la structure à surface ondulée s'étendant sensiblement perpendiculairement à la direction longitudinale.

4. Partie de canal (100) telle que revendiquée dans la revendication 3, dans laquelle un creux (125) ultrapériphérique de la première partie d'ouverture d'extrémité (110) présente un espace intérieur qui est agrandi radialement en comparaison avec au moins un autre creux (132) de la partie de canal.

5. Partie de canal (100) telle que revendiquée dans l'une quelconque des revendications précédentes, dans laquelle la bride (126) s'étendant vers l'extérieur, lorsque réceptionnée dans le creux (125), peut être déplacée et/ou inclinée par rapport au creux et le déplacement ou l'inclinaison étant limité(e) grâce à des parois latérales de creux proximale et distale espacées l'une de l'autre longitudinalement.

6. Partie de canal (100a) telle que revendiquée dans l'une quelconque des revendications précédentes, dans laquelle des parties de bord libre des première et seconde parois latérales présentent des premier (140, 141) et second (142, 143) moyens de connexion côté long, respectivement, adaptés pour la mise en prise par conjugaison de formes avec des moyens de connexion côté long (140; 141, 142; 143) correspondants d'une deuxième partie de canal (100b) similaire lorsque la partie de canal (100a) et la deuxième partie de canal (100b) sont positionnées de manière à ce que leurs coupes transversales en forme de U respectives forment ensemble un canal sensiblement fermé (200).

7. Partie de canal (100) telle que revendiquée par la revendication 6, dans laquelle le premier moyen de connexion côté long (140, 141) comprend un élément de verrouillage élastique (145) qui est adapté pour se mettre en prise avec un épaulement de verrouillage (146) formant une partie du second moyen de connexion côté long (142, 143).

8. Partie de canal (100) telle que revendiquée par la revendication 7, dans laquelle l'élément de verrouillage (145) comprend une surface de guidage (147) adaptée pour guider l'élément de verrouillage (145) dans ladite mise en prise avec l'épaulement de guidage (146).

9. Partie de canal (100) telle que revendiquée par les revendications 7 ou 8, dans laquelle le premier moyen de connexion (140, 141) comprend une languette (148) dépassant de sa partie de bord de paroi latérale (105) associée et portant l'élément de verrouillage (145).

10. Partie de canal (100) telle que revendiquée dans l'une quelconque des revendications 7-9, dans laquelle le second moyen de connexion (142, 143) comprend un élément d'espacement (149) disposé de manière à créer un espace entre l'épaulement de verrouillage (146) et sa partie de bord de paroi latérale (105) associée.

11. Canal (200) pour former une installation à câble enfoui, le canal comprenant une première partie de canal du bas (100a) telle que revendiquée dans l'une quelconque des revendications précédentes et une deuxième partie de canal du bas (100c) telle que revendiquée dans l'une quelconque des revendications précédentes, lesdites première (100a) et deuxième (100c) parties de canal étant interconnectées selon une relation bout à bout.

12. Canal (200) tel que revendiqué par la revendication 11, comprenant en outre une première partie de canal du haut (110b) telle que revendiquée dans l'une quelconque des revendications 1-10, laquelle est connectée à l'une parmi les première (100a) et deuxième (100c) parties de canal du bas de manière à former un canal fermé.

13. Procédé pour fournir un canal (200) pour un câble enfoui ou une installation de tuyaux, comprenant :
mise en place (S1) d'une première partie de canal (100a) telle que revendiquée dans l'une quelconque des revendications 1-10 de manière à ce que son ouverture longitudinale fasse sensiblement face vers le haut,
mise en place (S2) d'une deuxième partie de canal (100c) telle que revendiquée dans l'une quelconque des revendications 1-10 de manière à ce que son ouverture longitudinale fasse sensiblement face vers le haut et de manière à ce qu'une première partie d'ouverture d'extrémité (110) de la première partie de canal (110a) soit interconnectée avec une seconde partie d'ouverture d'extrémité (112) de la deuxième partie de canal (100c),
introduction (S3) d'un câble ou tuyau dans l'ouverture longitudinale des première et deuxième parties de canal,
mise en place (S4) d'une troisième partie de canal (100b), avec son ouverture longitudinale faisant face sensiblement vers le bas et alignée longitudinalement et latéralement avec l'une parmi les première et
deuxième parties de canal (100a; 100c),
interconnexion (S5) de la troisième partie de canal, le long de la direction longitudinale, avec ladite, une, des première et deuxième parties de canal (100a; 100c),
mise en place (S6) d'une quatrième partie de canal (100d) avec son ouverture longitudinale faisant sensiblement face vers le bas et alignée longitudinalement et latéralement avec l'autre, une, desdites première et deuxième parties de canal (100c; 100a), et
interconnexion (S7) de la quatrième partie de canal, le long de la direction longitudinale, avec ladite, une, autre des première et deuxième parties de canal (100c; 100a).
